# FASCICULE DE BREVET EUROPEEN

(11) **EP 2 129 468 B1**
(45) Date de publication et mention de la délivrance du brevet: **09.12.2015**
(21) Numéro de dépôt: 08709890.1
(22) Date de dépôt: 26.02.2008
(51) Int. Cl.: B02C 23/06, C08K 9/04, C09C 1/02, C09C 3/04

(54) **UTILISATION COMME AGENT DE RHEOLOGIE DANS UNE PATE PLASTIQUE CHARGEE, D'UN CARBONATE DE CALCIUM BROYE A SEC AVEC UN COPOLYMERE DE L'ACIDE (METH)ACRYLIQUE AVEC UNE FONCTION ALCOXY OU HYDROXY POLYALKYLENEGLYCOL**
VERWENDUNG EINES TROCKENGEMAHLENEN CALCIUMCARBONATS MIT EINEM (METH)ACRYLSÄURECOPOLYMER MIT ALKOXY- ODER HYDROXYPOLYALKYLENGLYKOLFUNKTION ALS RHEOLOGISCHES MITTEL IN EINER GEFÜLLTEN KUNSTSTOFFPASTE
USE AS RHEOLOGICAL AGENT IN CHARGED PLASTIC PASTE, OF DRY-GROUND CALCIUM CARBONATE WITH (METH)ACRYLIC ACID COPOLYMER WITH ALKOXY OR HYDROXY POLYALKYLENE GLYCOL FUNCTION

(30) Priorité: 05.03.2007 FR 0701592
(43) Date de publication de la demande: 09.12.2009
(73) Titulaire: COATEX S.A.S., 69730 Genay (FR)
(72) Inventeur: MONGOIN, Jacques, F-69650 Quincieux (FR); JACQUEMET, Christian, F-69005 Lyon (FR); SUAU, Jean-Marc, F-69480 Lucenay (FR); GUERRET, Olivier, F-69890 La Tour De Salvagny (FR); TROUVE, Patrick, F-92140 Clamart (FR)
(74) Mandataire: Fiorucci, Hélène
(86) Numéro de dépôt international: PCT/IB2008/000539
(87) Numéro de publication internationale: WO 2008/107787

(56) Documents cités:
- WO-A-01/96007
- US-A- 5 015 295

## Description

La présente invention concerne le domaine des matériaux thermoplastiques et thermodurcissables, lesdits matériaux étant chargés avec une matière minérale qui est un carbonate de calcium obtenu par broyage à sec.

Les matériaux thermoplastiques et thermodurcissables interviennent dans de nombreux objets manufacturés car leurs modes d'extrusion par injection, pressage, ou moulage permettent facilement de les mettre en oeuvre. Ces matériaux contiennent en général une charge minérale en concentration importante tel que le carbonate de calcium, et éventuellement des fibres de verre, qui permettent toutes deux de modifier les propriétés optiques et mécaniques de ces matériaux tout en optimisant leur coût : on parle donc de matériaux chargés.

De manière générale, la charge minérale et les éventuelles fibres de verre sont mélangées avec la résine thermoplastique ou thermodurcissable, ainsi qu'avec divers autres additifs tels que des catalyseurs, des pigments, des agents de démoulage, avant une étape de polymérisation : dans toute la suite de la Demande, un tel mélange sera appelé "pâte". Aussi, autant pour l'étape de fabrication de la pâte par mélange, que pour le transport de ladite pâte vers le dispositif où a lieu la réaction de polymérisation et / ou de transformation (tel qu'un moule de presse à compression ou injection, mais aussi encore une extrudeuse, etc...) il est important que la viscosité de ladite pâte soit suffisamment faible, de manière à rendre possible à la fois l'étape de mélange des constituants de la pâte, sa manipulation et son introduction dans le dispositif de polymérisation et / ou de transformation.

La recherche d'un tel comportement rhéologique est tout à fait fondamentale dans le cas des résines de polyester insaturé, qui constituent l'un des 2 matériaux thermodurcissables préférentiels visés par la présente Demande. Les techniques de transformation des polyesters insaturés sont nombreuses : coulée, projection, RTM (Resin Transfer Moulding), SMC (Sheet Moulding Compound), BMC (Bulk Moulding Compound... Il existe toutefois 2 grandes familles de procédés conduisant à la fabrication de matériaux polyesters insaturés et chargés : les SMC (Sheet Molding Compound ou littéralement Composite en Feuilles Moulées) et les BMC (Bulk Moulding Compound ou littéralement Composites en Vrac Moulés).

La fabrication des pièces en SMC requiert deux étapes. La première étape, dite d'élaboration du SMC, consiste en l'obtention d'un préimprégné résultant de l'association de fibres de verre et d'une pâte de résine thermodurcissable chargée qui est coulée sur ces fibres. La seconde étape, dite de compression du SMC, est celle du moulage dans une presse à chaud. Au cours de cette opération de mise en forme, l'action conjuguée de la température et de la pression mécanique permet le remplissage du moule par le SMC ainsi que sa réticulation.

A la différence des SMC, les BMC sont obtenus par une première étape qui est un mélange direct entre les fibres de verre et la pâte de résine thermodurcissable chargée. Ils sont présentés sous forme de "compound vrac" encore appelés "choucroute". Au cours d'une deuxième étape, ces compounds sont injectés grâce à une pompe jusqu'au moule, où a lieu la réticulation sous l'action de la pression et de la température. On comprend donc aisément l'exigence de l'homme du métier de réguler la viscosité de la pâte à une valeur suffisamment faible, de manière à disposer d'une pâte qui soit manipulable, aisément mélangeable avec les fibres de verre, et qui remplisse facilement et complètement le moule dans lequel est réalisée la pièce finale.

Parallèlement, dans le cas des résines polyuréthannes chargées qui constituent l'autre matériau thermodurcissable préférentiel visé par la présente Demande, la recherche d'une faible viscosité est aussi une des préoccupations de l'homme du métier. On sait en effet que les mousses polyuréthannes résultent du mélange intime entre une suspension de polyol contenant une charge minérale et divers additifs réactionnels, avec un composé polyisocyanate, qui conduit à l'obtention d'une pâte puis d'une mousse après la réaction de polymérisation. Or, la viscosité du composé polyisocyanate est beaucoup plus faible que celle du polyol : en vue d'obtenir un mélange intime, et aisément réalisable de ces 2 composés, il est important d'abaisser la viscosité de la suspension de polyol contenant la charge minérale. De la sorte, on diminue aussi la viscosité de la pâte polyuréthanne (après mélange entre le polyisocyanate et la suspension de polyol chargé et de viscosité réduite), ce qui facilite la manipulation de ladite pâte jusqu'à sa polymérisation.

Enfin, dans le cas des matériaux thermoplastiques préférentiellement visés par la présente Demande, à savoir les PVC, il est aussi essentiel de minimiser la viscosité de la pâte de PVC contenant une charge minérale : c'est notamment le cas dans les plastisols. D'une part, une faible viscosité permettra de manipuler aisément ladite pâte, et notamment de la transporter des cuves de fabrication à l'outil de transformation sans risque de sédimentation ou de colmatage des dispositifs de transport. D'autre part, une viscosité trop élevée peut engendrer des bulles au sein de ladite pâte chargée, ce qui nuit aux propriétés finales du plastisol obtenu.

De manière générale, cette exigence d'abaisser la viscosité de la pâte chargée est contrebalancée par le fait que ladite pâte renferme une matière minérale qui est le carbonate de calcium : en effet, il est bien connu depuis de nombreuses années que le carbonate de calcium a tendance à augmenter la viscosité de la résine polyester dans laquelle il est incorporé. Ceci est notamment indiqué dans le document "Flow properties of calcium carbonate filled polyester resins" (31st annual technical conference, Reinforced Plastics / Composites Institute, The Society of the Plastics Industry, Inc., section 8-D, 1976, pp 1-8). Aussi, le problème technique que doit résoudre l'homme du métier est d'incorporer du carbonate de calcium dans une résine thermoplastique ou thermodurcissable sans augmenter la viscosité de la pâte ainsi obtenue.

Les premières réponses apportées à ce problème ont consisté en la mise au point d'agents de traitement du carbonate de calcium. Ainsi, le document EP 0 153 193 A1 décrit-il une charge carbonatée broyée puis traitée par un acide carboxylique aliphatique dont la molécule comporte au moins 8 atomes de carbone. Le carbonate de calcium alors obtenu et mis en oeuvre dans une résine polyester insaturé ou PVC n'augmente pas la viscosité de la pâte ainsi formée. Parallèlement, le document FR 2 531 971 décrit des carbonates de calcium obtenus par broyage et qui sont traités en surface par des alcools gras choisis parmi l'octanol-1, le décanol-1, le dodécanol-1, le tridécanol-1, le tétradécanol-1 et leurs mélanges. Les exemples de ce document démontrent que la viscosité des pâtes polyester contenant lesdits carbonates de calcium possèdent une viscosité inférieure à celle des pâtes obtenues selon l'art antérieur. On peut aussi citer le document WO 2005 / 026252 qui décrit le traitement d'un carbonate de calcium, préalablement broyé, par un acide aminé ou un composé aminophosphaté : la charge minérale ainsi traitée et mise en oeuvre dans des pâtes polyesters permet d'en diminuer la viscosité. Néanmoins, ces solutions reposent sur la mise en oeuvre d'une étape supplémentaire de traitement du carbonate de calcium à la fois onéreuse en terme d'agent de traitement et de dispositif de traitement. On peut enfin citer le document WO 2006 / 100510 qui décrit une dispersion de charge minérale (tel un carbonate de calcium) dans un milieu non aqueux, en vue d'être mise en oeuvre dans un plastique, ladite dispersion ayant une viscosité Bohlin™ inférieure à 150 Pa.s. Cette dispersion est caractérisée en ce qu'elle contient un agent dispersant qui est un polymère ayant une chaîne grasse comportant au moins 12 atomes de carbone, éventuellement en combinaison avec l'acide stéarique comme agent hydrophobant de la charge minérale.

L'homme du métier a identifié un deuxième type de solutions au problème technique tel que décrit précédemment : ces solutions reposent sur la mise en oeuvre de carbonates de calcium présentant des caractéristiques granulométriques particulières. Ainsi, les publications "Flow properties of calcium carbonate filled polyester resins" (31st annual technical conference, Reinforced Plastics / Composites Institute, The Society of the Plastics Industry, Inc., 1976, pp 1-8) déjà citée dans la présente Demande et "A study of the influence of specific variables on viscosity relationships and surface properties of SMC formulations based on special calcium carbonate fillers" (32st annual technical conference, Reinforced Plastics / Composites Institute, The Society of the Plastics Industry, Inc., section 7-B, 1976, pp 1-8) ont tenté de relier la viscosité des pâtes polyesters contenant du carbonate de calcium, à la distribution de tailles des particules dudit carbonate, et notamment à leur compacité.

Plus récemment, le document JP 56104920 a décrit un mélange de 2 carbonates de calcium dont les diamètres médian sont inférieurs à 2 µm et 10 µm, mis en oeuvre dans une résine polyester. L'enseignement de ce document est que c'est l'existence de cette double population de tailles de particules de carbonates de calcium qui permet de réduire la viscosité de la pâte, sans altérer les propriétés du produit final. Toutefois, ces solutions représentent l'inconvénient de limiter l'homme du métier à un choix particulier de carbonates de calcium présentant des caractéristiques granulométriques très spécifiques, obtenues par des opérations de broyage, de classification ou de mélanges de différentes populations de tailles de particules.

L'homme du métier a aussi travaillé sur la nature du procédé de broyage du carbonate de calcium : en voie sèche et en voie humide. En ce qui concerne le broyage en milieu humide et qui constitue un troisième type de solutions, les méthodes proposées ne pouvaient donner entière satisfaction, car elles engendraient un coût supplémentaire par rapport aux carbonates de calcium obtenus par voie sèche. En effet, après avoir été broyées en milieu aqueux, les particules de carbonate de calcium devaient être séchées avant d'être incorporées dans la résine thermoplastique sans quoi, le caractère hydrophobe de la résine la rendait incompatible avec la charge carbonatée présente en milieu aqueux. Or, le séchage est une étape très onéreuse en terme d'énergie et d'appareillage mis en oeuvre

Inversement, l'homme du métier a constaté que le broyage en voie sèche conduisait à des particules de carbonate de calcium qui, lorsqu'elles sont ajoutées dans une résine polyester, conduisaient à de larges variations au niveau de la viscosité de la pâte résultante (ceci est clairement indiqué dans les documents US 5 102 465 et US 5 015 295). Il est cependant parvenu à mettre au point un quatrième type de solution reposant sur un broyage à sec, mais très restrictive : telle qu'indiquée dans les document précités, elle repose sur la mise en oeuvre de carbonates de calcium broyés à sec, présentant une teneur en impuretés inférieure à 5 % de leurs poids, et de diamètre médian compris entre 2 µm et 4 µm. Si de tels carbonates de calcium permettent d'abaisser la viscosité des pâtes polyesters dans lesquelles ils sont incorporés, leurs caractéristiques de pureté et de granulométrie apparaissent limitatives pour l'homme du métier.

Enfin, le document EP 0 359 385 A1 constitue un cinquième type de solutions, basées sur un mélange de 2 carbonates de calcium broyés respectivement à sec et en milieu humide, tout en présentant des caractéristiques granulométriques très particulières. On parvient ainsi à réduire la viscosité des résines thermodurcissables (telles que polyester) dans lesquelles sont ajoutés ces mélanges. Outre le caractère restrictif lié aux caractéristiques granulométriques de ces 2 carbonates de calcium, cette solution qui met en oeuvre un carbonate de calcium broyé par voie humide ne peut satisfaire l'homme du métier en terme de coût de production lié à l'étape de séchage.

Par conséquent, en vue de mettre en oeuvre un carbonate de calcium dans une résine thermoplastique ou thermodurcissable, tout en diminuant la viscosité de la pâte obtenue, aucune des solutions de l'art antérieur ne donne satisfaction à l'homme du métier :
- les procédés de traitement représentent un coût supplémentaire lié à l'étape de traitement,
- la mise en oeuvre de carbonates de calcium présentant des caractéristiques granulométriques particulières est trop limitative pour l'homme du métier,
- les procédés de broyage par voie humide s'avèrent onéreux, de part l'étape supplémentaire de séchage de la charge minérale broyée,
- les procédés de broyage en voie sèche, avec les agents d'aide au broyage à sec proposés par l'art antérieur, conduisent de manière générale à des charges qui ne permettent pas de stabiliser la viscosité des pâtes dans lesquelles elles sont ajoutées, ou sont associées à des caractéristiques de pureté et de granulométrie trop restrictives pour l'homme du métier.

Aussi, en vue de résoudre le problème technique précédemment évoqué, tout en palliant les inconvénients associés aux solutions proposées dans l'état de la technique, la Demanderesse a mis au point l'utilisation, comme agent diminuant la viscosité d'une pâte de résine thermoplastique ou thermodurcissable chargée avec un carbonate de calcium, d'un carbonate de calcium caractérisé en ce que ledit carbonate est broyé à sec en présence d'un agent d'aide au broyage d'une part, et en ce que l'agent d'aide au broyage d'autre part est un copolymère constitué :
a) d'au moins un monomère anionique choisi parmi l'acide acrylique, l'acide méthacrylique, et leurs mélanges,
b) et d'au moins un monomère non ionique, de formule (I) : 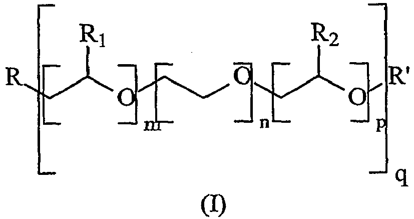 dans laquelle :
   - m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 4 atomes de carbone, R' étant très préférentiellement le radical méthyle,
   ou du mélange de plusieurs monomères de formule (I).
c) et éventuellement d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de terbutyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

Dans la suite de la demande, le monomère de formule (I) pourra être appelé monomère à fonction alcoxy ou hydroxy polyalkylèneglycol.

D'une part, cette solution évite les inconvénients énumérés auparavant, et liés aux solutions reposant sur le traitement ultérieur de la charge carbonatée, sur le choix de caractéristiques granulométriques particulières pour le carbonate de calcium, sur les méthodes de broyage par voie humide. D'autre part, et de manière tout à fait surprenante par rapport à l'état de la technique qui enseignait que des carbonates de calcium broyés en voie sèche conduisaient de manière générale à des modifications de la viscosité des résines polyesters, à moins que ledit carbonate de calcium ne possédât des caractéristiques granulométriques et de pureté tout à fait particulières comme dévoilées dans les documents US 5 102 465 et US 5 015 295, la solution proposée par la présente invention permet :
- de mettre en oeuvre un carbonate de calcium broyé par voie sèche, sans condition restrictive en terme de granulométrie ou de pureté,
- de diminuer ainsi la viscosité des pâtes polyesters dans lesquelles ils sont incorporés (notamment en comparaison avec des carbonates de calcium obtenus par broyage à sec, avec un agent d'aide au broyage de l'art antérieur),
- et ce, sans altérer les propriétés de la pièce finale, telles que ses propriétés mécaniques.

Un des mérites de la Demanderesse repose sur le fait qu'elle a su identifier un axe de recherche qui n'était ni dévoilé ni suggéré par l'état de la technique : celui des agents d'aide au broyage à sec du carbonate de calcium. En effet, aucun des documents précités, et qui cherchait à résoudre le problème technique objet de la présente Demande, n'avait souligné que la nature de l'agent d'aide au broyage mis en oeuvre pouvait avoir une influence sur la viscosité de la pâte thermoplastique ou thermodurcissable chargée, et pouvait de manière avantageuse conduire à une diminution de celle-ci.

Un autre de ses mérites repose sur le fait qu'elle a su identifier des agents d'aide au broyage à sec tout à fait particuliers, qui permettent de résoudre de manière avantageuse et surprenante le problème technique objet de la présente Demande. En effet, comme va désormais le démontrer l'état de la technique relatif aux agents d'aide au broyage à sec du carbonate de calcium, celui-là ne contenait aucune divulgation ou enseignement susceptible de conduire l'homme du métier à la solution technique objet de la présente Demande.

Il existe une première catégorie d'agents d'aide au broyage à sec du carbonate de calcium, qui sont des acides faibles tels que les acides formique, acétique, lactique, lignitique, adipique, lactique, ou les acides gras, et en particulier les acides palmitique et stéarique. Dans ce contexte, le document FR 2 863 914 décrit l'utilisation d'acide adipique pendant le broyage à sec d'un matériau minéral tel que le carbonate de calcium, en vue d'éviter la réagglomération ultérieure dudit matériau ou la formation de poussière pendant l'opération de broyage. De même, le document EP 0 510 890 A1 décrit l'utilisation d'un acide gras qui est plus préférentiellement l'acide stéarique (exemple 3), dans le but de répartir de manière uniforme l'additif d'aide au broyage sur le matériau inorganique.

Un deuxième groupe d'agents d'aide au broyage à sec est constitué des composés aminés. Le document GB 2 179 268 décrit à ce sujet un procédé de broyage en milieu sec d'un matériau, tel que du carbonate de calcium, notamment par mise en oeuvre d'amines tel que l'alkyl propylène diamine. L'objectif de ce document, très éloigné de celui de la présente Demande, est d'améliorer l'efficacité de l'opération de broyage.

Le troisième groupe d'agents d'aide au broyage est sans doute le mieux connu de l'homme du métier, et le plus couramment mis en oeuvre : il est constitué d'alcools du type éthylène, diéthylène, triéthylène, propylène et dipropylène glycol. Ainsi les documents WO 2002 / 081 573 et US 2003 / 019 399 décrivent-ils l'utilisation de diéthylène glycol comme agent d'aide au broyage à sec (voir tableau 1 dans chacun de ces documents). On peut aussi mentionner le document WO 2005 / 026252, déjà mentionné dans la présente Demande et qui, dans ses exemples, met en oeuvre pendant une étape de broyage du carbonate de calcium un composé qui est un polypropylène glycol ou un éthylène glycol.

Enfin, il existe une dernière catégorie d'agents d'aide au broyage à sec du carbonate de calcium, et qui est constituée des copolymères à base d'un monomère du type acide (méth)acrylique copolymérisé avec un monomère portant une fonction alcoxy ou hydroxy polyalkylèneglycol, qui sont ceux mis en oeuvre dans la présente Demande. La mise en oeuvre de ces copolymères, comme agent d'aide au broyage à sec du carbonate de calcium, est révélée par 3 demandes de brevet françaises, non encore publiées à la date de dépôt de la présente Demande, et déposées sous les numéros : FR 05 11274, FR 05 12797 et FR 06 09535. Ces 3 documents divulguent la possibilité de broyer à sec du carbonate de calcium en présence des copolymères mis en oeuvre dans la présente invention. En revanche, aucun d'eux ne dévoile l'utilisation de carbonates de calcium ainsi obtenus comme agent diminuant la viscosité d'une pâte thermoplastique ou thermodurcissable.

En conclusion, l'état de la technique sur les agents d'aide au broyage à sec ne pouvait dévoiler ni suggérer à l'homme du métier la solution qui fait l'objet de la présente invention.

Cette solution consiste donc en l'utilisation, comme agent diminuant la viscosité d'une pâte constituée d'une résine thermoplastique ou thermodurcissable et de carbonate de calcium, d'un carbonate de calcium caractérisé en ce que ledit carbonate est broyé à sec en présence d'un agent d'aide au broyage d'une part, et en ce que l'agent d'aide au broyage d'autre part est un copolymère constitué :
a) d'au moins un monomère anionique choisi parmi l'acide acrylique, l'acide méthacrylique et leurs mélanges,
b) et d'au moins un monomère non ionique, de formule (I) : 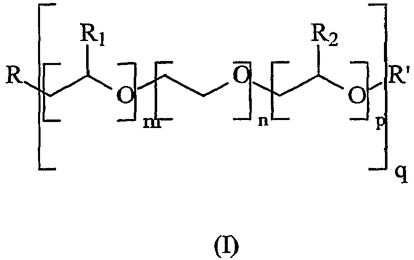 dans laquelle :
   - m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 4 atomes de carbone, R' étant très préférentiellement le radical méthyle,
   ou du mélange de plusieurs monomères de formule (I),
c) et éventuellement d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de terbutyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

Cette utilisation est aussi caractérisée en ce que ledit copolymère est constitué, exprimé en pourcentage en poids des monomères (la somme des pourcentages en poids de tous les monomères étant égale à 100 %) :
a) de 0,5 % à 50 %, préférentiellement de 1 % à 25 %, très préférentiellement de 5 % à 20 %, d'au moins un monomère anionique choisi parmi l'acide acrylique, l'acide méthacrylique et leurs mélanges,
b) de 50 % à 99,5 %, préférentiellement de 75 % à 99 %, très préférentiellement de 80 % à 95 %, d'au moins un monomère non ionique, de formule (I) : 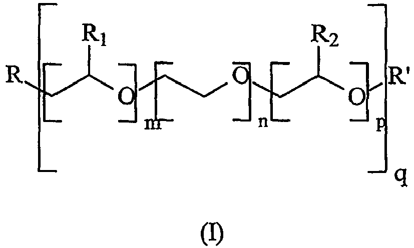 dans laquelle :
   - m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 4 atomes de carbone, R' étant très préférentiellement le radical méthyle,
   ou du mélange de plusieurs monomères de formule (I),
c) et de 0 % à 50 % d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

Cette utilisation est aussi caractérisée en ce que ledit copolymère est obtenu sous forme acide et éventuellement distillé, et est éventuellement partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est choisi parmi la triéthanolamine et l'hydroxyde de sodium.

Cette utilisation est aussi caractérisée en ce que ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

Cette utilisation est aussi caractérisée en ce que ledit copolymère peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.
L'une des phases correspond alors au polymère utilisé selon l'invention.

Cette utilisation est aussi caractérisée en ce qu'on met en oeuvre de 0,05 % à 5 %, préférentiellement de 0,1 % à 3 %, très préférentiellement de 0,1 % à 1 % en poids sec dudit copolymère, par rapport au poids sec de carbonate de calcium pendant le broyage à sec dudit carbonate.

Dans une première variante, cette utilisation est caractérisée en ce que la résine qui constitue la pâte est une résine thermoplastique choisie parmi les résines halogénées, telles que préférentiellement le PVC, le polychlorure de vinyle surchloré (PVCC), le polyfluorure de vinylidène (PVDF), ou choisie parmi les résines styréniques, telles que préférentiellement les copolymères styrène-butadiène à haut taux de styrène (HIPS), les élastomères thermoplastiques tels que les copolymères blocs de type Kraton™, les résines du type styrène-acrylonitrile, les résines acrylate-butadiène-styrène, les copolymères styrène méthylméthacrylate, ou choisie parmi les résines acryliques, telles que préférentiellement le polyméthacrylate de méthyle, ou choisie parmi les polyoléfines, telles que préférentiellement les polyéthylènes ou les polypropylènes, ou choisie parmi les résines polycarbonates, ou choisie parmi les résines polyamide, ou choisie parmi les polyesters thermoplastiques ou le mélange de ces résines, et en ce que ladite résine est très préférentiellement constituée de PVC.

Dans une seconde variante, cette utilisation est caractérisée en ce que la résine qui constitue la pâte est une résine thermodurcissable choisie parmi les élastomères ou les latex vulcanisables, les résines époxydes, polyuréthannes, de polyester insaturé, et leurs mélanges et en ce que ladite résine est préférentiellement choisie parmi les résines de polyester insaturé ou polyuréthannes.

### EXEMPLES

Dans tous les exemples, le poids moléculaire des polymère mis en oeuvre est déterminé selon la méthode explicitée ci-dessous, par chromatographie d'exclusion stérique à multi-détection (CES 3D).

La chaîne de CES 3D est composée comme suit :
- dégazeur en ligne pour phase mobile ERC 3112
- pompe isocratique de type Waters 515 ou Viscotek VE1121
- injecteur automatique Waters 717+
- four pour colonnes Waters CHM
- jeu de 3 colonnes Waters Ultrahydrogel de longueur 30cm et diamètre interne 7,8mm 1 colonne linéaire suivie de 2 colonnes 120Å, l'ensemble étant précédé par une colonne de garde de même nature
- ensemble de détecteurs connectés en parallèle : Viscotek T60A combinant LS et viscosimétrie et réfractomètre différentiel Waters 2410
- système informatique et logiciel : Viscotek TriSEC 3.0 GPC software

### Composition de la phase mobile :

- préparation d'une solution mère : Na₂SO₄ 666mM, filtrée à 0,1 µm
- préparation de la phase mobile à 66,6mM en Na₂SO₄ (soit une force ionique de 0,2M) :
- 10 % en volume de la solution mère précédente
- 5 % en volume d'acétonitrile
- 85 % en volume d'eau à 18,2 MΩ
- pH ajusté à 9,0 par quelques gouttes de soude N

### Paramètres opérationnels :

- débit : 0,8ml/min
- température des colonnes et du réfractomètre : 40°C
- volume d'injection : 100 µl
- concentration en polymère à l'injection : 2 à 4 mg/ml en fonction de la masse molaire moyenne attendue pour chaque échantillon (optimisation des réponses des détecteurs)
- durée d'analyse : 50 min

### Etalonnage des détecteurs :

Utilisation de deux étalons certifiés :
- Viscotek PEO22k, étalon de faible indice de polymolécularité (Ip) pour étalonnage proprement dit du système
- Viscotek Dextran T70k, étalon de fort indice (Ip) pour vérification et affinage de l'étalonnage.

### Exemple 1

Cet exemple illustre l'utilisation de carbonates de calcium broyés à sec, par mise en oeuvre d'un agent d'aide au broyage selon l'art antérieur ou selon l'invention, dans la fabrication d'une pâte constituée d'une résine thermodurcissable qui est une résine de polyester insaturé et dudit carbonate de calcium.

Pour ce faire, on commence par broyer un carbonate de calcium, qui est un marbre italien, et dont les caractéristiques granulométriques telles que mesurées par tamisage, sont les suivantes :
- 29,9 % en poids des particules ont un diamètre moyen inférieur à 1 mm,
- 8,5 % en poids des particules ont un diamètre moyen compris entre 500 et 1 000 µm,
- 17,5% en poids des particules ont un diamètre moyen compris entre 200 et 500 µm,
- 17,7 % en poids des particules ont un diamètre moyen compris entre 100 et 200 µm,
- 27,7 % en poids des particules ont un diamètre moyen compris entre 50 et 100 µm,
- 15,6 % en poids des particules ont un diamètre moyen inférieur à 50 µm.

Ce carbonate de calcium est broyé à sec, dans un broyeur à boulets, avec des billes de broyage de type Cylpebs™. Cette étape de broyage met en oeuvre 0,15 % en poids sec (par rapport au poids sec de carbonate de calcium) d'un agent d'aide au broyage à sec selon l'invention ou selon l'art antérieur. Le carbonate de calcium ainsi broyé subit alors une opération de classification dans un classificateur à air du type Alpine™ 100 ATP, commercialisé par la société HOSOKAWA™, sa vitesse de rotation étant réglée à 7 000 tours / minute et son débit d'air à 300 m³/h. Pour chacun des carbonates de calcium ainsi obtenus, on a ensuite mesuré les pourcentages en poids de particules dont le diamètre moyen est inférieur à 1 µm et à 2 µm, respectivement notés % < 1 µm et % < 2 µm ; ces valeurs ont été reportées dans les tableaux 1 à 3 à la fin de cet exemple.

Consécutivement aux étapes de broyage et de sélection, on a ensuite réalisé des pâtes par mélange de 100 parts en poids sec d'une résine de polyester insaturé commercialisée par la société CRAY VALLEY™ sous le nom de Norsodyne™ I 2984 V, et de 150 parts en poids sec du carbonate de calcium obtenu précédemment. Pour chacune des pâtes obtenues, on a ensuite déterminé la viscosité Brookfield™ HBT, à 25 °C et à 50 tours / minute, avec le mobile adéquat, selon la technique bien connue de l'homme du métier, cette viscosité étant notée µ 50 t / min. (mPa.s) ; ces valeurs ont été reportées dans les tableaux 1 à 3 à la fin de cet exemple.

### Essais n° 1, 2 et 3

Ces essais illustrent l'art antérieur, et mettent en oeuvre comme agent d'aide au broyage à sec du monopropylène glycol. Au niveau de l'étape de broyage à sec, ces 3 essais diffèrent par les caractéristiques granulométriques finales des carbonates de calcium obtenus, telles qu'indiquées dans le tableau 1.

### Essai n° 4

Cet essai illustre l'art antérieur, et met en oeuvre comme agent d'aide au broyage à sec la triisopropylamine.

### Essai n° 5

Cet essai illustre l'art antérieur, et met en oeuvre comme agent d'aide au broyage à sec le 2-amino-2-méthyl-1-propanol.

### Essai n° 6

Cet essai illustre l'art antérieur, et met en oeuvre comme agent d'aide au broyage à sec un mélange de 66 % en poids de monopropylène glycol et de 33 % en poids de triisopropylamine.

### Essai n° 7

Cet essai illustre l'invention et met en oeuvre comme agent d'aide au broyage à sec un copolymère constitué de, exprimé en pourcentage en poids de chacun des monomères :
a) 3,9 % d'acide acrylique, 5,5 % d'acide méthacrylique,
b) 89,1 % d'un monomère de formule (I) dans laquelle R₁ et R₂ représentent l'hydrogène, R représente le groupe méthacrylate, R' représente le radical méthyle, et avec (m+n+p)q = 45, et 1,5 % d'hémimaléate de butoxy oxypropylé ayant 20 motifs oxypropylés,
entièrement neutralisé par la soude et de poids moléculaire égal à 46 900 g/mole.

### Essai n° 8

Cet essai illustre l'invention et met en oeuvre comme agent d'aide au broyage à sec un copolymère constitué de, exprimé en pourcentage en poids de chacun des monomères :
a) 1,5 % d'acide acrylique, 1,9 % d'acide méthacrylique,
b) 96,6 % d'un monomère de formule (I) dans laquelle R₁ et R₂ représentent l'hydrogène, R représente le groupe méthacrylate, R' représente le radical méthyle, et avec (m+n+p)q = 113,
entièrement neutralisé par la soude et de poids moléculaire égal à 49 300 g/mole.

### Essai n° 9

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 81,5 % d'un monomère de formule (I) dans laquelle R₁ et R₂ représentent l'hydrogène, R représente le groupe méthacrylate, R' représente le radical méthyle, et avec (m+n+p)q = 45,
non neutralisé et de poids moléculaire égal à 45 300 g/mole.

### Essai n° 10

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 81,5 % d'un monomère de formule (I) dans laquelle R₁ et R₂ représentent l'hydrogène, R représente le groupe méthacrylate, R' représente le radical méthyle, et avec (m+n+p)q = 45,
dont 50 % en mole des sites carboxyliques ont été neutralisés par la soude et de poids moléculaire égal à 45 000 g/mole.

### Essai n° 11

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 81,5 % d'un monomère de formule (I) dans laquelle R₁ et R₂ représentent l'hydrogène, R représente le groupe méthacrylate, R' représente le radical méthyle, et avec (m+n+p)q = 45,
dont 50 % en mole des sites carboxyliques ont été neutralisés par l'hydroxyde de magnésium et de poids moléculaire égal à 46 300 g/mole.

### Essai n° 12

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 81,5 % d'un monomère de formule (I) dans laquelle R₁ et R₂ représentent l'hydrogène, R représente le groupe méthacrylate, R' représente le radical méthyle, et avec (m+n+p)q = 45,
dont 25 % en mole des sites carboxyliques ont été neutralisés par l'hydroxyde de potassium et de poids moléculaire égal à 45 800 g/mole.

### Essai n° 13

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 81,5 % d'un monomère de formule (I) dans laquelle R₁ et R₂ représentent l'hydrogène, R représente le groupe méthacrylate, R' représente le radical méthyle, et avec (m+n+p)q = 45,
entièrement neutralisé par la soude et de poids moléculaire égal à 44 700 g/mole.

### Essai n° 14

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 81,5 % d'un monomère de formule (I) dans laquelle R₁ et R₂ représentent l'hydrogène, R représente le groupe méthacrylate, R' représente le radical méthyle, et avec (m+n+p)q =17,
entièrement neutralisé par la soude et de poids moléculaire égal à 28 300 g/mole.

### Essai n° 15

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 81,5 % d'un monomère de formule (I) dans laquelle R₁ et R₂ représentent l'hydrogène, R représente le groupe méthacrylate, R' représente le radical méthyle, et avec (m+n+p)q = 67,
entièrement neutralisé par la soude et de poids moléculaire égal à 44 900 g/mole.

### Essai n° 16

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 76,5 % d'un monomère de formule (I) dans laquelle R₁ et R₂ représentent l'hydrogène, R représente le groupe méthacrylate, R' représente le radical méthyle, et avec (m+n+p)q = 45,
c) 5 % d'acrylamide,
entièrement neutralisé par la soude et de poids moléculaire égal à 46 100 g/mole.

### Essai n° 17

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 71,5 % d'un monomère de formule (I) dans laquelle R₁ et R₂ représentent l'hydrogène, R représente le groupe méthacrylate, R' représente le radical méthyle, et avec (m+n+p)q = 45,
c) 10 % d'acrylate d'éthyle,
entièrement neutralisé par la soude et de poids moléculaire égal à 45 300 g/mole.

### Essai n° 18

Cet essai illustre l'invention et met en oeuvre comme agent d'aide au broyage à sec un copolymère constitué de, exprimé en pourcentage en poids de chacun des monomères :
a) 5,7 % d'acide acrylique, 1,8 % d'acide méthacrylique,
b) 92,5 % d'un monomère de formule (I) dans laquelle R₁ et R₂ représentent l'hydrogène, R représente le groupe méthacrylate, R' représente le radical méthyle, et avec (m+n+p)q = 113,
entièrement neutralisé par la soude et de poids moléculaire égal à 36 000 g/mole.

### Essai n° 19

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 81,5 % d'un monomère de formule (I) dans laquelle R₁ et R₂ représentent l'hydrogène, R représente le groupe méthacrylate, R' représente le radical méthyle, et avec (m+n+p)q = 45,
entièrement neutralisé par la soude et de poids moléculaire égal à 28 000 g/mole.

### Essai n° 20

Cet essai illustre l'invention et met en oeuvre comme agent d'aide au broyage à sec un copolymère constitué de, exprimé en pourcentage en poids de chacun des monomères :
a) 6 % d'acide acrylique, 1,8 % d'acide méthacrylique,
b) 92,2 % d'un monomère de formule (I) dans laquelle R₁ et R₂ représentent l'hydrogène, R représente le groupe méthacrylate, R' représente le radical méthyle, et avec (m+n+p)q =113,
entièrement neutralisé par la soude et de poids moléculaire égal à 1 563 000 g/mole.

### Essai n° 21

Cet essai illustre l'invention et met en oeuvre comme agent d'aide au broyage à sec un copolymère constitué de, exprimé en pourcentage en poids de chacun des monomères :
a) 6 % d'acide acrylique, 1,8 % d'acide méthacrylique,
b) 92,2 % d'un monomère de formule (I) dans laquelle R₁ et R₂ représentent l'hydrogène, R représente le groupe méthacrylate, R' représente le radical méthyle, et avec (m+n+p)q =113,
entièrement neutralisé par la soude et de poids moléculaire égal à 570 000 g/mole.

### Essai n° 22

Cet essai illustre l'invention et met en oeuvre comme agent d'aide au broyage à sec un copolymère constitué de, exprimé en pourcentage en poids de chacun des monomères :
a) 6 % d'acide acrylique, 1,8 % d'acide méthacrylique,
b) 92,2 % d'un monomère de formule (I) dans laquelle R₁ et R₂ représentent l'hydrogène, R représente le groupe méthacrylate, R' représente le radical méthyle, et avec (m+n+p)q = 113,
entièrement neutralisé par la soude et de poids moléculaire égal à 1 019 000 g/mole.

**Tableau 1**

| Essai n° | | 1 | 2 | 3 | 4 | 5 | 6 |
|---|---|---|---|---|---|---|---|
| Art Antérieur / Invention (AA/IN) | | AA | AA | AA | AA | AA | AA |
| CaCO3 broyé | % < 1 µm | 21 | 13 | 22 | 23 | 22 | 23 |
| | % < 2 µm | 50 | 31 | 60 | 58 | 59 | 59 |
| pâte polyester chargée | µ 50 t/min (mPa.s) | 7300 | 7100 | 7500 | 9800 | 9300 | 8700 |

**Tableau 2**

| Essai n° | | 7 | 8 | 9 | 10 | 11 | 12 | 13 | 14 |
|---|---|---|---|---|---|---|---|---|---|
| Art Antérieur / Invention (AA/IN) | | IN | IN | IN | IN | IN | IN | IN | IN |
| CaCO3 broyé | % < 1 µm | 28 | 27 | 29 | 29 | 30 | 27 | 28 | 29 |
| | % < 2 µm | 68 | 70 | 72 | 69 | 70 | 68 | 69 | 70 |
| pâte polyester chargée | µ 50 t / min (mPa.s) | 6200 | 6800 | 5900 | 6050 | 5850 | 5900 | 5950 | 5850 |

**Tableau 3**

| Essai n° | | 15 | 16 | 17 | 18 | 19 | 20 | 21 | 22 |
|---|---|---|---|---|---|---|---|---|---|
| Art Antérieur / Invention (AA/IN) | | IN | IN | IN | IN | IN | IN | IN | IN |
| CaCO3 broyé | %< 1 µm | 30 | 31 | 29 | 28 | 29 | 27 | 28 | 30 |
| | %< 2 µm | 68 | 70 | 69 | 69 | 68 | 68 | 68 | 68 |
| pâte polyester chargée | µ 50 t / min (mPa.s) | 5600 | 5750 | 5850 | 5400 | 6600 | 3900 | 4100 | 4150 |

La comparaison entre les valeurs de µ 50 t / min du tableau 1 et des tableaux 2 et 3, démontre que l'utilisation dans une pâte polyester de carbonates de calcium broyés selon l'invention, a permis de diminuer avantageusement la viscosité Brookfield™ de la pâte ainsi chargée, par rapport à la même pâte chargée avec un carbonate de calcium broyé avec un agent d'aide au broyage selon l'art antérieur.

Ce résultat est d'autant plus surprenant que les carbonates de calcium broyés selon l'art antérieur sont plus "grossiers" que les carbonates de calcium mis en oeuvre selon l'invention, comme en témoignent leurs caractéristiques granulométriques.
Or, a priori, l'homme du métier sait que pour 2 carbonates obtenus à partir du même agent d'aide au broyage, le plus grossier conduit à la plus faible viscosité de la pâte polyester dans laquelle il est incorporé (on vérifie ainsi que, pour des carbonates broyés avec le même agent d'aide au broyage, la viscosité diminue entre les essais 3 et 1, puis 1 et 2, ce qui correspond bien à un carbonate plus grossier dans l'essai 1 que dans l'essai 3, et à un carbonate plus grossier dans l'essai 2 que dans l'essai 1).

### Exemple 2

Cet exemple illustre l'utilisation de carbonates de calcium broyés à sec, par mise en oeuvre d'un agent d'aide au broyage selon l'art antérieur ou selon l'invention, dans la fabrication d'une pâte constituée d'un polyol et dudit carbonate de calcium. Un des buts de cet exemple est de démontrer qu'on parvient ainsi à diminuer la viscosité de la pâte de polyol chargée, ce qui permettra de diminuer ultérieurement la viscosité de la pâte polyuréthanne résultant du mélange entre un polyisocyanate et cette pâte de polyol chargée et de viscosité réduite.

Pour ce faire, on broye puis on classe un carbonate de calcium qui est un marbre italien, dont les caractéristiques granulométriques sont identiques à celles données dans l'exemple 1, les étapes de broyage et de classification étant identiques à celles décrites dans l'exemple 1. Le broyage met en oeuvre 0,15 % en poids sec (par rapport au poids sec de carbonate de calcium) d'un agent d'aide au broyage à sec selon l'invention ou selon l'art antérieur. Pour chacun des carbonates de calcium ainsi obtenus, on a ensuite mesuré les pourcentages en poids de particules dont le diamètre moyen est inférieur à 1 µm et à 2 µm, respectivement notés % < 1 µm et % < 2 µm.

Consécutivement aux étapes de broyage et de sélection, on a ensuite réalisé des pâtes par mélange selon les méthodes bien connues de l'homme du métier de 100 parts en poids sec d'un polyol commercialisé par la société DOW PLASTICS™ sous le nom de Voranol™ 3322, et de 100 parts en poids sec du carbonate de calcium obtenu précédemment. Pour chacune des pâtes obtenues, on a ensuite déterminé les viscosités Brookfield™ HBT, à 25 °C et à 10, 50 et 100 tours / minute, avec le mobile adéquat, selon la technique bien connue de l'homme du métier, ces viscosités étant notées µ 10 t / min, µ 50 t / min, µ 100 t / min.

### Essais n° 23

Cet essai illustre l'art antérieur, et mettent en oeuvre comme agent d'aide au broyage à sec le monopropylène glycol.

### Essai n° 24

Cet essai illustre l'art antérieur, et met en oeuvre comme agent d'aide au broyage à sec du 2-amino-2-méthyl-1-propanol.

### Essai n° 25

Cet essai illustre l'art antérieur, et met en oeuvre comme agent d'aide au broyage à sec la triisopropylamine.

### Essai n° 26

Cet essai illustre l'art antérieur, et met en oeuvre comme agent d'aide au broyage à sec un mélange de 66 % en poids de monopropylène glycol et de 33 % en poids de triisopropylamine.

### Essai n° 27

Cet essai illustre l'invention et met en oeuvre comme agent d'aide au broyage à sec un copolymère constitué de, exprimé en pourcentage en poids de chacun des monomères :
a) 6 % d'acide acrylique, 1,8 % d'acide méthacrylique,
b) 92,2 % d'un monomère de formule (I) dans laquelle R₁ et R₂ représentent l'hydrogène, R représente le groupe méthacrylate, R' représente le radical méthyle, et avec (m+n+p)q = 113,
entièrement neutralisé par la soude et de poids moléculaire égal à 1 563 000 g/mole.

### Essai n° 28

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 81,5 % d'un monomère de formule (I) dans laquelle R₁ et R₂ représentent l'hydrogène, R représente le groupe méthacrylate, R' représente le radical méthyle, et avec (m+n+p)q = 45,
entièrement neutralisé par la soude et de poids moléculaire égal à 44 700 g/mole.

**Tableau 4**

| Essai n° | | 23 | 24 | 25 | 26 | 27 | 28 |
|---|---|---|---|---|---|---|---|
| Art Antérieur / Invention (AA/IN) | | AA | AA | AA | AA | IN | IN |
| CaCO3 broyé | % < 1 µm | 22 | 23 | 22 | 23 | 28 | 29 |
| | % < 2 µm | 58 | 58 | 59 | 59 | 68 | 69 |
| Polyol Chargé | µ 50 t / min (mPa.s) | 9000 | 9300 | 8800 | 9300 | 7600 | 6700 |
| | µ 100 t /min (mPa.s) | 6800 | 6800 | 6600 | 7100 | 5700 | 5100 |

Ces résultats démontrent que la mise en oeuvre des carbonates de calcium broyés à sec en présence des agents d'aide au broyage selon l'invention, permet de diminuer notablement les viscosités Brookfield™ des compositions polyol chargées et ce, comparativement à des carbonates de calcium plus grossiers d'une part, et broyés avec des agents d'aide au broyage selon l'art antérieur d'autre part. on pourra donc utiliser avantageusement ces pâtes de polyol chargées pour diminuer la viscosité de pâtes polyuréthannes à base de polyisocyanates et de ces pâtes de polyols chargées.

### Exemple 3

Cet exemple illustre l'utilisation de carbonates de calcium broyés à sec, par mise en oeuvre d'un agent d'aide au broyage selon l'art antérieur ou selon l'invention, dans la fabrication d'une pâte thermoplastique constituée de PVC, de dioctyl phthalate, et dudit carbonate de calcium.

Pour ce faire, on broye puis on classe un carbonate de calcium qui est un marbre italien, dont les caractéristiques granulométriques sont identiques à celles données dans l'exemple 1, les étapes de broyage et de classification étant identiques à celles décrites dans l'exemple 1. Le broyage met en oeuvre 0,15 % en poids sec (par rapport au poids sec de carbonate de calcium) d'un agent d'aide au broyage à sec selon l'invention ou selon l'art antérieur. Pour chacun des carbonates de calcium ainsi obtenus, on a ensuite mesuré les pourcentages en poids de particules dont le diamètre moyen est inférieur à 1 µm et à 2 µm, respectivement notés % < 1 µm et % < 2 µm.

Consécutivement aux étapes de broyage et de sélection, on a ensuite réalisé des pâtes par mélange selon les méthodes bien connues de l'homme du métier de 100 parts en poids sec d'un PVC commercialisé par la société ARKEMA™ sous le nom de Lacovyl™ PB 1702, de 75 parts en poids sec de dioctyl phthalate, et de 50 parts en poids sec du carbonate de calcium obtenu précédemment. Pour chacune des pâtes obtenues, on a ensuite déterminé les viscosités Brookfield™ HBT, à 25 °C et à 10, 50 et 100 tours / minute, avec le mobile adéquat, selon la technique bien connue de l'homme du métier, ces viscosités étant notées µ 10 t / min, µ 50 t / min, µ 100 t / min.

### Essais n° 29

Cet essai illustre l'art antérieur, et mettent en oeuvre comme agent d'aide au broyage à sec le monopropylène glycol.

### Essai n° 30

Cet essai illustre l'art antérieur, et met en oeuvre comme agent d'aide au broyage à sec le 2-amino-2-méthyl-1-propanol.

### Essai n° 31

Cet essai illustre l'art antérieur, et met en oeuvre comme agent d'aide au broyage à sec la triisopropylamine.

### Essai n° 32

Cet essai illustre l'art antérieur, et met en oeuvre comme agent d'aide au broyage à sec un mélange de 66 % en poids de monopropylène glycol et de 33 % en poids de triisopropylamine.

### Essai n° 33

Cet essai illustre l'invention et met en oeuvre comme agent d'aide au broyage à sec un copolymère constitué de, exprimé en pourcentage en poids de chacun des monomères :
a) 6 % d'acide acrylique, 1,8 % d'acide méthacrylique,
b) 92,2 % d'un monomère de formule (I) dans laquelle R₁ et R₂ représentent l'hydrogène, R représente le groupe méthacrylate, R' représente le radical méthyle, et avec (m+n+p)q = 113,
entièrement neutralisé par la soude et de poids moléculaire égal à 1 563 000 g/mole.

### Essai n° 34

Cet essai illustre l'invention et met en oeuvre comme agent d'aide au broyage à sec un copolymère constitué de, exprimé en pourcentage en poids de chacun des monomères :
a) 13,6 % d'acide acrylique, 4,9 % d'acide méthacrylique,
b) 81,5 % d'un monomère de formule (I) dans laquelle R₁ et R₂ représentent l'hydrogène, R représente le groupe méthacrylate, R' représente le radical méthyle, et avec (m+n+p)q = 45,
entièrement neutralisé par la soude et de poids moléculaire égal à 44 700 g/mole.

**Tableau 5**

| Essai n° | | 29 | 30 | 31 | 32 | 33 | 34 |
|---|---|---|---|---|---|---|---|
| Art Antérieur / Invention (AA/IN) | | AA | AA | AA | AA | IN | IN |
| CaCO3 broyé | % < 1 µm | 22 | 23 | 22 | 23 | 28 | 29 |
| | %< 2 µm | 58 | 58 | 59 | 59 | 68 | 69 |
| PVC chargé | µ 50 t / min (mPa.s) | 15700 | 14400 | 12400 | 14300 | 12400 | 9300 |
| | µ 100 t /min (mPa.s) | 11200 | 10800 | 10000 | 10300 | 9600 | 7500 |

Ces résultats démontrent que la mise en oeuvre des carbonates de calcium broyés à sec en présence des agents d'aide au broyage selon l'invention, permet de diminuer notablement les viscosités Brookfield™ des compositions PVC chargées et ce, comparativement à des carbonates de calcium plus grossiers d'une part, et broyés avec des agents d'aide au broyage selon l'art antérieur d'autre part.

## Revendications

1. Utilisation, comme agent diminuant la viscosité d'une pâte constituée d'une résine thermoplastique ou thermodurcissable et de carbonate de calcium, d'un carbonate de calcium **caractérisé en ce que** ledit carbonate est broyé à sec en présence d'un agent d'aide au broyage d'une part, et **en ce que** l'agent d'aide au broyage d'autre part est un copolymère constitué :
a) d'au moins un monomère anionique choisi parmi l'acide acrylique, l'acide méthacrylique et leurs mélanges,
b) et d'au moins un monomère non ionique, de formule (I) : 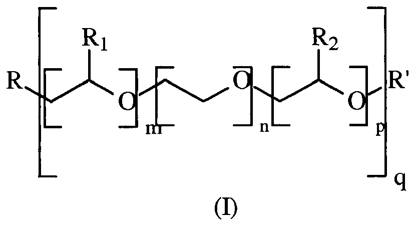 dans laquelle :
- m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
- R' représente l'hydrogène ou un radical hydrocarboné ayant 1 à 40 atomes de carbone, préférentiellement 1 à 4 atomes de carbone, R' étant très préférentiellement le radical méthyle,
ou du mélange de plusieurs monomères de formule (I),
c) et éventuellement d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

2. Utilisation d'un carbonate de calcium selon la revendication 1, **caractérisée en ce que** ledit copolymère est constitué, exprimé en pourcentage en poids des monomères (la somme des pourcentages en poids de tous les monomères étant égale à 100 %) :
a) de 0,5 % à 50 %, préférentiellement de 1 % à 25 %, très préférentiellement de 5 % à 20 %, d'au moins un monomère anionique choisi parmi l'acide acrylique, l'acide méthacrylique et leurs mélanges,
b) de 50 % à 99,5 %, préférentiellement de 75 % à 99 %, très préférentiellement de 80 % à 95 %, d'au moins un monomère non ionique, de formule (I) : 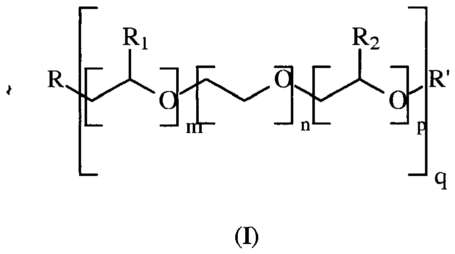 dans laquelle :
- m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
- R' représente l'hydrogène ou un radical hydrocarboné ayant 1 à 40 atomes de carbone, préférentiellement 1 à 4 atomes de carbone, R' étant très préférentiellement le radical méthyle,
ou du mélange de plusieurs monomères de formule (I),
c) et de 0 % à 50 % d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

3. Utilisation d'un carbonate de calcium selon l'une des revendications 1 ou 2, **caractérisée en ce que** ledit copolymère est obtenu sous forme acide et éventuellement distillé, et est éventuellement partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle **en ce que** l'agent de neutralisation est choisi parmi la triéthanolamine et l'hydroxyde de sodium.

4. Utilisation d'un carbonate de calcium selon l'une des revendications 1 à 3, **caractérisée en ce que** ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

5. Utilisation d'un carbonate de calcium selon l'une des revendications 1 à 4, **caractérisée en ce que** ledit copolymère peut éventuellement avant ou après la réaction de neutralisation totale ou partielle, être traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

6. Utilisation d'un carbonate de calcium selon l'une des revendications 1 à 5, **caractérisée en ce qu'**on met en oeuvre de 0,05 % à 5 %, préférentiellement de 0,1 % à 3 %, très préférentiellement de 0,1 % à 1 % en poids sec dudit copolymère, par rapport au poids sec de carbonate de calcium pendant le broyage à sec dudit carbonate.

7. Utilisation d'un carbonate de calcium selon l'une des revendications 1 à 6, **caractérisée en ce que** la résine qui constitue la pâte est une résine thermoplastique choisie parmi les résines halogénées, telles que préférentiellement le PVC, le polychlorure de vinyle surchloré (PVCC), le polyfluorure de vinylidène (PVDF), ou choisie parmi les résines styréniques, telles que préférentiellement les copolymères styrène-butadiène à haut taux de styrène (HIPS), les élastomères thermoplastiques tels que les copolymères blocs de type Kraton™, les résines du type styrène-acrylonitrile, les résines acrylate-butadiène-styrène, les copolymères styrène méthylméthacrylate, ou choisie parmi les résines acryliques, telles que préférentiellement le polyméthacrylate de méthyle, ou choisie parmi les polyoléfines, telles que préférentiellement les polyéthylènes ou les polypropylènes, ou choisie parmi les résines polycarbonates, ou choisie parmi les résines polyamides, ou choisie parmi les polyesters thermoplastiques ou le mélange de ces résines, et **en ce que** ladite résine est très préférentiellement constituée de PVC.

8. Utilisation d'un carbonate de calcium selon l'une des revendications 1 à 6, **caractérisée en ce que** la résine qui constitue la pâte est une résine thermodurcissable choisie parmi les élastomères ou les latex vulcanisables, les résines époxydes, polyuréthannes, de polyester insaturé, et leurs mélanges, et **en ce que** ladite résine est préférentiellement choisie parmi les résines de polyester insaturé ou polyuréthannes.

## Patentansprüche

1. Verwendung eines Calciumcarbonats als Mittel zur Verringerung der Viskosität einer Paste, die aus einem thermoplastischen oder hitzehärtenden Harz und Calciumcarbonat besteht, **dadurch gekennzeichnet, dass** einerseits das Carbonat in Gegenwart eines Mahlhilfsmittels trocken gemahlen wird und dass andererseits das Mahlhilfsmittel ein Copolymer ist, das aus:
a) mindestens einem anionischen Monomer, das aus Acrylsäure, Methacrylsäure und Mischungen davon ausgewählt ist,
b) und mindestens einem nichtionischen Monomer der Formel (I): 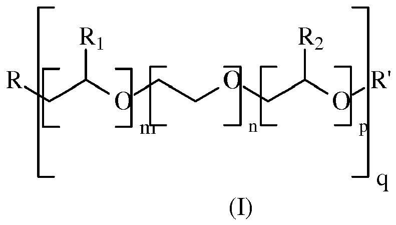 worin:
- m, n, p und q solche ganze Zahlen sind, dass: m, n, p ≤ 150, q ≥ 1 und 5 ≤ (m+n+p)q ≤ 150 und vorzugsweise 15 ≤ (m+n+p)q ≤ 120,
- R₁ für Wasserstoff oder den Methyl- oder Ethylrest steht,
- R₂ für Wasserstoff oder den Methyl- oder Ethylrest steht,
- R für einen Rest mit einer polymerisierbaren ungesättigten Funktion, vorzugsweise aus der Gruppe der Vinylverbindungen sowie der Gruppe der Acrylsäure-, Methacrylsäure- und Maleinsäureester sowie der Gruppe der ungesättigten Urethane wie Acrylurethan, Methacrylurethan, α,α'-Dimethyl-isopropenyl-Benzylurethan und Allylurethan sowie der Gruppe der substituierten oder unsubstituierten Allyl- oder Vinylether oder auch der Gruppe der ethylenisch ungesättigten Amide oder Imide oder auch der Gruppe bestehend aus Acrylamid und Methacrylamid, steht,
- R' für Wasserstoff oder einen Kohlenwasserstoffrest mit 1 bis 40 Kohlenstoffatomen und vorzugsweise 1 bis 4 Kohlenstoffatomen steht, wobei R' besonders bevorzugt der Methylrest ist,
oder einer Mischung mehrerer Monomere der Formel (I),
c) und gegebenenfalls mindestens einem anderen Monomer, ausgewählt aus (Meth)acrylsäureanhydrid, (Meth)acrylamid oder (Meth)acrylsäureestern, wie vorzugsweise Acrylaten und Methacrylaten mit 1 bis 20 Kohlenstoffatomen im Esterrest, wie besonders bevorzugt Methyl-, Ethyl-, Isopropyl-, n-Propyl-, Isobutyl, n-Butyl-, tert-Butyl- und 2-Ethylhexylacrylat, Methyl- und Ethylmethacrylat, hydroxylierten Methacrylaten wie Hydroxyethyl- und Hydroxypropylmethacrylat, oder aus aromatischen Vinylmonomeren wie vorzugsweise Styrol, α-Methylstyrol und Styrolsulfonat oder Acrylamido-2-methyl-2-propansulfonsäure oder aus Organophosphat-Monomeren, wie vorzugsweise Ethylenglykolacrylat- und Ethylenglykolmethacrylatphosphat oder Acrylat- und Methacrylatphosphaten von Oxyethylen- und/oder Oxypropylenglykol, und Mischungen davon.

2. Verwendung eines Calciumcarbonats nach Anspruch 1, **dadurch gekennzeichnet, dass** das Copolymer, ausgedrückt als Gewichtsprozentanteil der Monomere, aus Folgendem besteht (wobei die Summe der Gewichtsprozentanteile aller der Monomere gleich 100% ist):
a) 0,5% bis 50%, vorzugsweise 1% bis 25%, besonders bevorzugt 5% bis 20%, mindestens eines anionischen Monomers, das aus Acrylsäure, Methacrylsäure und Mischungen davon ausgewählt ist,
b) 50% bis 99,5%, vorzugsweise 75% bis 99%, besonders bevorzugt 80% bis 95%, mindestens eines nichtionischen Monomers der Formel (I): 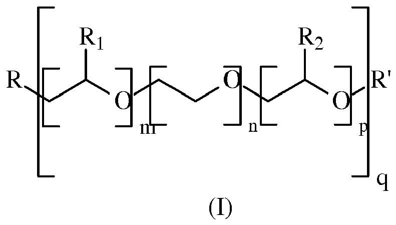 worin:
- m, n, p und q solche ganze Zahlen sind, dass: m, n, p ≤ 150, q ≥ 1 und 5 ≤ (m+n+p)q ≤ 150 und vorzugsweise 15 ≤ (m+n+p)q ≤ 120,
- R₁ für Wasserstoff oder den Methyl- oder Ethylrest steht,
- R₂ für Wasserstoff oder den Methyl- oder Ethylrest steht,
- R für einen Rest mit einer polymerisierbaren ungesättigten Funktion, vorzugsweise aus der Gruppe der Vinylverbindungen sowie der Gruppe der Acrylsäure-, Methacrylsäure- und Maleinsäureester sowie der Gruppe der ungesättigten Urethane wie Acrylurethan, Methacrylurethan, α,α'-Dimethyl-isopropenyl-Benzylurethan und Allylurethan sowie der Gruppe der substituierten oder unsubstituierten Allyl- oder Vinylether oder auch der Gruppe der ethylenisch ungesättigten Amide oder Imide oder auch der Gruppe bestehend aus Acrylamid und Methacrylamid, steht,
- R' für Wasserstoff oder einen Kohlenwasserstoffrest mit 1 bis 40 Kohlenstoffatomen und vorzugsweise 1 bis 4 Kohlenstoffatomen steht, wobei R' besonders bevorzugt der Methylrest ist,
oder einer Mischung mehrerer Monomere der Formel (I),
c) und 0% bis 50% mindestens eines anderen Monomers, ausgewählt aus (Meth)acrylsäureanhydrid, (Meth)acrylamid oder (Meth)acrylsäureestern, wie vorzugsweise Acrylaten und Methacrylaten mit 1 bis 20 Kohlenstoffatomen im Esterrest, wie besonders bevorzugt Methyl-, Ethyl-, Isopropyl-, n-Propyl-, Isobutyl-, n-Butyl-, tert-Butyl- und 2-Ethylhexylacrylat, Methyl- und Ethylmethacrylat, hydroxylierten Methacrylaten wie Hydroxyethyl- und Hydroxypropylmethacrylat, oder aus aromatischen Vinylmonomeren wie vorzugsweise Styrol, α-ethylstyrol und Styrolsulfonat oder Acrylamido-2-methyl-2-propansulfonsäure oder aus Organophosphat-Monomeren, wie vorzugsweise Ethylenglykolacrylat- und Ethylenglykolmethacrylatphosphat oder Acrylat- und Methacrylatphosphaten von Oxyethylen- und/oder Oxypropylenglykol, und Mischungen davon.

3. Verwendung eines Calciumcarbonats nach einem der Ansprüche 1 oder 2, **dadurch gekennzeichnet, dass** das Copolymer in saurer Form erhalten wird und gegebenenfalls destilliert wird und gegebenenfalls teilweise oder vollständig mit einem oder mehreren Neutralisationsmitteln, die über ein einwertiges oder mehrwertiges Kation verfügen, neutralisiert wird, wobei die Mittel vorzugsweise aus wässrigem Ammoniak oder aus den Hydroxiden und/oder Oxiden von Calcium und Magnesium oder aus den Hydroxiden von Natrium, Kalium und Lithium oder aus den aliphatischen und/oder cyclischen primären, sekundären oder tertiären Aminen wie vorzugsweise Stearylamin, den Ethanolaminen (Mono-, Di-, Triethanolamin), Mono- und Diethylamin, Cyclohexylamin, Methylcyclohexylamin, Aminomethylpropanol und Morpholin ausgewählt sind, und vorzugsweise dadurch, dass das Neutralisationsmittel aus Triethanolamin und Natriumhydroxid ausgewählt ist.

4. Verwendung eines Calciumcarbonats nach einem der Ansprüche 1 bis 3, **dadurch gekennzeichnet, dass** das Copolymer durch Verfahren der radikalischen Polymerisation in Lösung, in direkter oder inverser Emulsion, in Suspension oder mit Fällung in Lösungsmitteln in Gegenwart von katalytischen Systemen und Kettenübertragungsmitteln oder auch durch Verfahren der kontrollierten radikalischen Polymerisation und vorzugsweise durch Polymerisation, die mit Nitroxiden (NMP) oder mit Cobaloximen kontrolliert wird, durch radikalische Atomtransferpolymerisation (ATRP), durch radikalische Polymerisation, die mit Schwefelderivaten, die aus Carbamaten, Dithioestern oder Trithiocarbonaten (RAFT) oder Xanthogenaten ausgewählt sind, kontrolliert wird, erhalten wird.

5. Verwendung eines Calciumcarbonats nach einem der Ansprüche 1 bis 4, **dadurch gekennzeichnet, dass** das Copolymer gegebenenfalls vor oder nach der Reaktion zur vollständigen oder teilweisen Neutralisation mit einem oder mehreren polaren Lösungsmitteln, vorzugsweise aus der Gruppe bestehend aus Wasser, Methanol, Ethanol, Propanol, Isopropanol, den Butanolen, Aceton, Tetrahydrofuran oder deren Mischungen, behandelt und gemäß statischen oder dynamischen Verfahren, die dem Fachmann bekannt sind, in mehrere Phasen aufgetrennt werden kann.

6. Verwendung eines Calciumcarbonats nach einem der Ansprüche 1 bis 5, **dadurch gekennzeichnet, dass** während des Trockenmahlens des Carbonat 0,05 bis 5 Gew.-%, vorzugsweise 0,1 bis 3 Gew.-% und besonders bevorzugt 0,1 bis 1 Gew.-% des Copolymers, bezogen auf das Trockengewicht des Calciumcarbonat, eingesetzt werden.

7. Verwendung eines Calciumcarbonats nach einem der Ansprüche 1 bis 6, **dadurch gekennzeichnet, dass** es sich bei dem Harz, aus dem die Paste besteht, um ein thermoplastisches Harz, das aus halogenierten Harzen, wie vorzugsweise PVC, chloriertem Polyvinylchlorid (CPVC), Polyvinylidenfluorid (PVDF), oder aus Styrolharzen, wie vorzugsweise Styrol-Butadien-Copolymeren mit hohem Styrolgehalt (HIPS), thermoplastischen Elastomeren wie Blockcopolymere vom Kraton^{™}-Typ, Harzen vom Styrol-Acrylnitril-Typ, Harzen vom Styrol-Acrylnitril-Typ, Acrylat-Butadien-Styrol-Harzen, -Styrol-Methylmethacrylat-Copolymeren, oder aus Acrylharzen, wie vorzugsweise Polymethylmethacrylat, oder aus Polyolefinen, wie vorzugsweise Polyethylenen oder Polypropylenen, oder aus Polycarbonatharzen oder aus Polyamidharzen oder aus thermoplastischen Polyestern oder einer Mischung dieser Harze ausgewählt ist, handelt, wobei das Harz besonders bevorzugt aus PVC besteht.

8. Verwendung eines Calciumcarbonats nach einem der Ansprüche 1 bis 6, **dadurch gekennzeichnet, dass** es sich bei dem Harz, aus dem die Paste besteht, um ein hitzehärtendes Harz, das aus vulkanisierbaren Elastomeren oder Latices, Epoxidharzen, Polyurethanharzen, ungesättigten Polyesterharzen und Mischungen davon ausgewählt ist, handelt und dass das Harz vorzugsweise aus ungesättigten Polyesterharzen oder Polyurethanharzen ausgewählt ist.

## Claims

1. Use, as an agent reducing the viscosity of a paste consisting of a thermoplastic or thermosetting resin, and of calcium carbonate, of a calcium carbonate **characterised in that** said carbonate is dry-ground in the presence of a grinding aid agent, firstly, and **in that** the grinding aid agent is, secondly, a copolymer consisting:
a) of at least one anionic monomer chosen from among acrylic acid, methacrylic acid and their mixtures,
b) and of at least one non-ionic monomer, of formula (I): 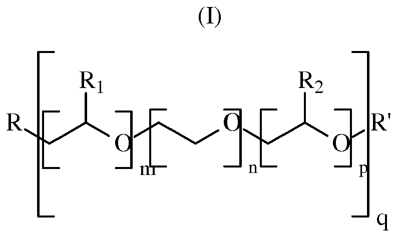 in which:
- m, n, p and q are integers such that: m, n, p ≤ 150, q ≥ 1, and 5 ≤ (m+n+p)q ≤ 150, and preferentially 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, as well as to the group of acrylic, methacrylic, maleic esters, as well as to the group of unsaturated urethanes such as acrylurethane, methacrylurethane, α-α' dimethyl-isopropenyl benzylurethane, allylurethane, as well as to the group of allylic or vinylic ethers substituted or not, or again to the group of ethylenically unsaturated amides or imides, or again to the group consisting of acrylamide and methacrylamide,
- R' represents hydrogen or a hydrocarbon radical with 1 to 40 carbon atoms, preferentially 1 to 4 carbon atoms, R' being very preferentially the methyl radical,
or a mixture of several monomers of formula (I),
c) and eventually of at least one other monomer chosen from among (meth)acrylic anhydride, (meth)acrylamide, or from among the (meth)acrylic esters, such as preferentially the acrylates and methacrylates with 1 to 20 carbon atoms in their ester radical, such as very preferentially the methyl, ethyl, isopropyl, n-propyl, isobutyl, n-butyl, ter-butyl or 2-ethylhexyl acrylates, the methyl or ethyl methacrylates, the hydroxylated methacrylates such as the hydroxyethyl and hydroxypropyl methacrylates, or from among the aromatic vinylic monomers such as preferentially styrene, α-methylstyrene, styrene sulfonate, or acrylamido-2-methyl-2-propane-sulfonic acid, or from among the organophosphate monomers, such as preferentially the acrylate and methacrylate phosphates of ethylene glycol, or the acrylate and methacrylate phosphates of oxyethylene and/or oxypropylene glycol, and their mixtures.

2. Use of a calcium carbonate according to claim 1, **characterised in that** said copolymer consists, expressed as a percentage by weight of the monomers (the sum of the percentages by weight of all the monomers being equal to 100%):
a) from 0.5% to 50%, preferentially from 1% to 25%, and very preferentially from 5% to 20%, of at least one anionic monomer chosen from among acrylic acid, methacrylic acid and their mixtures,
b) from 50% to 99.5%, preferentially from 75% to 99%, and very preferentially from 80% to 95%, of at least one non-ionic monomer, of formula (I): 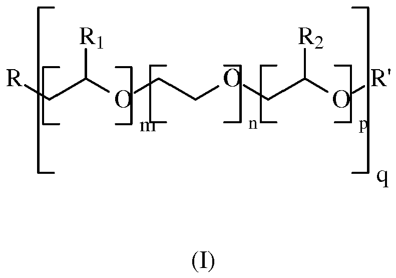 in which:
- m, n, p and q are integers such that: m, n, p ≤ 150, q ≥ 1, and 5 ≤ (m+n+p)q ≤ 150, and preferentially 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, as well as to the group of acrylic, methacrylic, maleic esters, as well as to the group of unsaturated urethanes such as acrylurethane, methacrylurethane, α-α' dimethyl-isopropenyl benzylurethane, allylurethane, as well as to the group of allylic or vinylic ethers substituted or not, or again to the group of ethylenically unsaturated amides or imides, or again to the group constituted by acrylamide and methacrylamide,
- R' represents hydrogen or a hydrocarbon radical with 1 to 40 carbon atoms, preferentially 1 to 4 carbon atoms, R' being very preferentially the methyl radical,
or a mixture of several monomers of formula (I),
c) and from 0% to 50% of at least one other monomer chosen from among (meth)acrylic anhydride, (meth)acrylamide, or from among the (meth)acrylic esters, such as preferentially the acrylates and methacrylates with 1 to 20 carbon atoms in their ester radical, such as very preferentially the methyl, ethyl, isopropyl, n-propyl, isobutyl, n-butyl, ter-butyl or 2-ethylhexyl acrylates, the methyl or ethyl methacrylates, the hydroxylated methacrylates such as the hydroxyethyl and hydroxypropyl methacrylates, or from among the aromatic vinylic monomers such as preferentially styrene, α-methylstyrene, styrene sulfonate, or acrylamido-2-methyl-2-propane-sulfonic acid, or from among the organophosphate monomers, such as preferentially the acrylate and methacrylate phosphates of ethylene glycol, or the acrylate and methacrylate phosphates of oxyethylene and/or oxypropylene glycol, and their mixtures.

3. Use of a calcium carbonate according to one of the claims 1 or 2, **characterised in that** said copolymer is obtained in the acidic form and eventually distilled, and is eventually partially or totally neutralised by one or more neutralisation agents having a monovalent or polyvalent cation, said agents being chosen preferentially from among ammonia or from among calcium, magnesium hydroxides and/or oxides, or from among sodium, potassium or lithium hydroxides, or from among the aliphatic and/or cyclic primary, secondary or tertiary amines, such as preferentially stearylamine, the ethanolamines (mono-, di- and triethanolamine), mono- and diethylamine, cyclohexylamine, methylcyclohexylamine, amino methyl propanol, morpholine, and preferentially **in that** the neutralisation agent is chosen from among triethanolamine and sodium hydroxide.

4. Use of a calcium carbonate according to one of the claims 1 to 3, **characterised in that** said copolymer is obtained by processes of radical polymerisation in solution, in a direct or reverse emulsion, in suspension or precipitation in solvents, in the presence of catalytic systems and chain transfer agents, or again by processes of controlled radical polymerisation, and preferentially by Nitroxide Mediated Polymerisation (NMP) or by cobaloximes, by Atom Transfer Radical Polymerisation (ATRP), by controlled radical polymerisation by sulphurated derivatives, chosen from among carbamates, dithioesters or trithiocarbonates (RAFT) or xanthates.

5. Use of a calcium carbonate according to one of the claims 1 to 4, **characterised in that** said copolymer may eventually be, before or after the total or partial neutralisation reaction, treated and separated into several phases, according to static or dynamic processes, by one or more polar solvents belonging preferentially to the group consisting of water, methanol, ethanol, propanol, isopropanol, the butanols, acetone, tetrahydrofuran or their mixtures.

6. Use of a calcium carbonate according to one of the claims 1 to 5, **characterised in that** from 0.05% to 5%, preferentially from 0.1 % to 3%, and very preferentially from 0.1 % to 1%, by dry weight of said copolymer relative to the dry weight of calcium carbonate is used during the dry grinding of said carbonate.

7. Use of a calcium carbonate according to one of the claims 1 to 6, **characterised in that** the resin constituting the paste is a thermoplastic resin chosen from among the halogenated resins, such as preferentially PVC, chlorinated polyvinyl chloride (PVCC), vinylidene polyfluoride (PVDF), or chosen from among the styrenic resins, such as preferentially styrene-butadiene copolymers with a high styrene rate (HIPS), thermoplastic elastomers such as block copolymers of the Kraton™ type, resins of the styrene-acrylonitrile type, acrylate-butadiene-styrene resins, styrene methylmethacrylate copolymers, or chosen from among the acrylic resins, such as preferentially methyl polymethacrylate, or chosen from among the polyolefines, such as preferentially polyethylenes or polypropylenes, or chosen from among the polycarbonate resins, or chosen from among the polyamide resins, or chosen from among the thermoplastic polyesters or a mixture of these resins, and **in that** said resin very preferentially consists of PVC.

8. Use of a calcium carbonate according to one of the claims 1 to 6, **characterised in that** the resin constituting the paste is a thermosetting resin chosen from among the vulcanisable elastomers or latexes, the epoxide, polyurethane, or unsaturated polyester resins, and their mixtures, and **in that** said resin is preferentially chosen from among the unsaturated or polyurethane polyester resins.
